# NEUE EUROPÄISCHE PATENTSCHRIFT

(11) **EP 2 883 926 B2**
(45) Veröffentlichungstag und Bekanntmachung des Hinweises auf die Entscheidung über den Einspruch: **26.07.2023**
(45) Hinweis auf die Patenterteilung: 28.09.2016
(21) Anmeldenummer: 14179525.2
(22) Anmeldetag: 01.08.2014
(51) Int. Cl.: C09J 133/08

(54) **HAFTKLEBEMASSE**
Adhesive mass
Masse adhésive

(30) Priorität: 02.08.2013 DE 102013215296
(43) Veröffentlichungstag der Anmeldung: 17.06.2015
(73) Patentinhaber: tesa SE, 22848 Norderstedt (DE)
(72) Erfinder: Burmeister, Axel, 22527 Hamburg (DE); Dollase, Thilo, 22397 Hamburg (DE); Krawinkel, Thorsten, 22457 Hamburg (DE); Mayer, Michael, 22299 Hamburg (DE); Petersen, Anika, 24598 Heidmühlen (DE)
(74) Vertreter: tesa SE

(56) Entgegenhaltungen:
- EP-A2- 0 457 566
- EP-A2- 0 457 566
- WO-A1-00/06637
- WO-A1-01/59024
- WO-A1-2014/026668
- WO-A2-02/14448
- DE-A1- 10 015 981
- DE-A1-102008 062 368
- US-A- 5 876 855
- US-A1- 2003 082 373
- US-A1- 2010 075 132
- US-A1- 2010 098 962
- US-A1- 2012 216 953
- US-A1- 2012 285 618
- US-B1- 6 503 621
- US-B1- 6 632 522
- US-B2- 6 630 239

## Beschreibung

Die Erfindung betrifft das technische Gebiet der Haftklebemassen, wie sie in Klebebändern eingesetzt werden. Insbesondere schlägt die Erfindung eine geschäumte Haftklebemasse auf Basis von Polyacrylat und Synthesekautschuk sowie einer speziellen Kombination von Klebharzen vor.

In vielen Technologiebereichen werden zunehmend Klebebänder zur Verbindung von Bauteilen eingesetzt. Zunehmend werden diese auch für Verklebungen auf unpolaren, niedrigenergetischen Untergründen wie beispielsweise Autolacken eingesetzt. Dabei sind hohe Verklebungsfestigkeiten und gute Sofortklebkräfte häufig sehr schwierig zu realisieren. Im Stand der Technik werden zu diesem Zweck oft Klebstoffzusammensetzungen eingesetzt, die auf Polymergemischen basieren.

US 4,107,233 A beschreibt eine Verbesserung der Adhäsion und der Bedruckbarkeit zu bzw. von Styrol-Butadien-Copolymeren (SBC) durch Zusatz von Polyacrylat.

EP 0 349 216 A1 offenbart eine Verbesserung der Kälteschlagfestigkeit von Polyacrylat-Haftklebemassen durch den Zusatz von SBC, wobei 95 bis 65 Teile Polyacrylat mit 5 bis 35 Teilen SBC abgemischt werden. In der Schrift wird auch die Verklebung auf Automobillacken thematisiert.

EP 0 352 901 A1 betrifft Haftklebemassen, die 60 bis 95 Teile eines UV-polymerisierten Polyacrylats und 35 bis 5 Teile eines Synthesekautschuks enthalten. Durch diese Rezeptierung werden die Kaltschlagfestigkeit und die Verklebung auf Farben verbessert.

EP 0 437 068 A2 offenbart zelluläre haftklebrige Membranen basierend auf Polyacrylat/SBC-Blends.

EP 0 457 566 A2 führt Klebemassen auf, die auf speziellen Polyacrylaten basieren. Diese sind mit einer weiteren Klebemasse gemischt, bei der es sich um einen durch Harze haftklebrig eingestellten Synthesekautschuk handeln kann. Neben einer hohen Kohäsion soll ein ausgeglichenes Klebkraftverhalten auf polaren und unpolaren Untergründen auf hohem Niveau erreicht werden.

In WO 95/19393 A1 ist ein Blend aus einem mit einer Carboxylgruppe modifizierten Styrol-Blockcopolymer und einem zumindest eine Stickstoff-haltige Monomersorte enthaltenden Polyacrylat beschrieben. Ein Ziel dieser Technologie ist die Verbesserung der Klebeeigenschaften auf niedrigenergetischen Untergründen.

WO 2008/070386 A1 beschreibt Polymerblends, die mindestens 92 Teile einer SBCbasierten Klebmasse und bis zu 10 Teile einer Polyacrylat-Komponente enthalten.

WO 2000/006637 A1 offenbart Blends aus Polyacrylaten und SBC als Basis geschäumter Klebmasseschichten.

Es besteht trotz des im Stand der Technik dokumentierten vorangeschrittenen Erkenntnisgewinns ein anhaltender Bedarf an leistungsfähigen Haftklebemassen für unpolare Untergründe.

Aufgabe der Erfindung ist es daher, eine Haftklebemasse mit hoher Klebkraft auch auf unpolaren Untergründen und mit hoher Scherfestigkeit zur Verfügung zu stellen.

Der Lösung der Aufgabe liegt der Gedanke zugrunde, als Basis der Haftklebemasse ein Gemisch aus Polyacrylat und Synthesekautschuk sowie eine spezielle Mischung von Klebharzen zu verwenden. Ein erster Gegenstand der Erfindung ist daher eine Haftklebemasse, die
a) 30 - 65 Gew.-%, bezogen auf das Gesamtgewicht der Haftklebemasse, mindestens eines Poly(meth)acrylats;
b) 5 - 20 Gew.-%, bezogen auf das Gesamtgewicht der Haftklebemasse, mindestens eines Synthesekautschuks;
c) mindestens einen mit dem/den Poly(meth)acrylat(en) verträglichen Tackifier; und
d) mindestens ein mit dem/den Synthesekautschuk(en) verträgliches Kohlenwasserstoffharz

enthält, und dadurch gekennzeichnet ist, dass der mit dem/den Poly(meth)acrylat(en) verträgliche Tackifier ein Terpenphenolharz oder ein Kolophoniumderivat ist und
dass die Haftklebemasse geschäumt ist.
Eine derartige Haftklebemasse weist eine hohe Klebkraft auch auf unpolaren Untergründen wie beispielsweise Automobillacken und eine ausgeprägte Scherfestigkeit auf, wie durch entsprechende Tests gezeigt werden konnte.

Unter einer "Haftklebemasse" wird entsprechend dem allgemeinen Verständnis des Fachmanns ein viskoelastischer Klebstoff verstanden, dessen abgebundener, trockener Film bei Raumtemperatur permanent klebrig ist und klebfähig bleibt sowie durch leichten Anpressdruck auf einer Vielzahl von Substraten verklebt werden kann.

Unter einem "Poly(meth)acrylat" wird ein Polymer verstanden, dessen Monomerbasis zu mindestens 60 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 50 Gew.-%, bezogen auf die gesamte Monomerbasis des betreffenden Polymers, enthalten sind. Insbesondere wird unter einem "Poly(meth)acrylat" ein Polymerisat verstanden, welches durch radikalische Polymerisation von Acryl- und/oder Methacrylmonomeren sowie gegebenenfalls weiteren, copolymerisierbaren Monomeren erhältlich ist.

Erfindungsgemäß ist das Poly(meth)acrylat bzw. sind Poly(meth)acrylate zu 30 bis 65 Gew.-%, bezogen auf das Gesamtgewicht der Haftklebemasse, enthalten. Bevorzugt enthält die erfindungsgemäße Haftklebemasse 35 bis 55 Gew.-%, bezogen auf das Gesamtgewicht der Haftklebemasse, mindestens eines Poly(meth)acrylats.

Die Glasübergangstemperatur der erfindungsgemäß einsetzbaren Poly(meth)acrylate beträgt bevorzugt < 0 °C, stärker bevorzugt zwischen -20 und -50 °C. Die Glasübergangstemperatur von Polymeren oder Polymerblöcken in Blockcopolymeren wird im Rahmen dieser Erfindung mittels dynamischer Scanning Kalorimetrie (DSC) bestimmt. Dazu werden ca. 5 mg einer unbehandelten Polymerprobe in ein Aluminiumtiegelchen (Volumen 25 µL) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf-150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

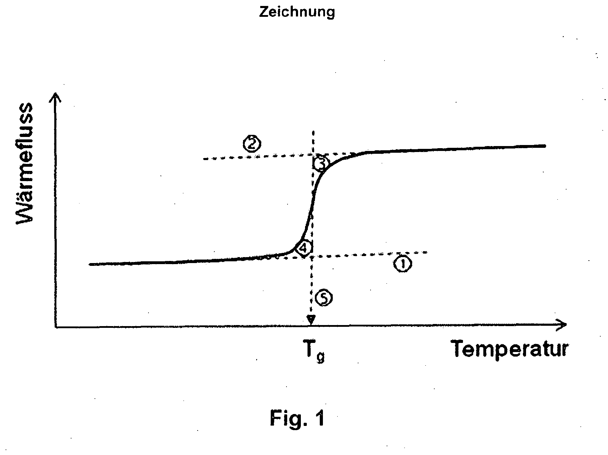

Die Glasübergangstemperatur wird folgendermaßen ausgewertet (siehe Figur 1):
Der jeweils linear verlaufende Bereich der Messkurve vor und nach der Stufe wird in Richtung steigender (Bereich vor der Stufe) bzw. fallender (Bereich nach der Stufe) Temperaturen verlängert. Im Bereich der Stufe wird eine Ausgleichsgerade ⑤ parallel zur Ordinate so gelegt, dass sie die beiden Verlängerungslinien schneidet, und zwar so, dass zwei Flächen ③ und ④ (zwischen der jeweils einen Verlängerungslinie, der Ausgleichsgeraden und der Messkurve) gleichen Inhalts entstehen. Der Schnittpunkt der so positionierten Ausgleichsgeraden mit der Messkurve ergibt die Glasübergangstemperatur.

Vorzugsweise sind die Poly(meth)acrylate der erfindungsgemäßen Haftklebemasse erhältlich durch zumindest anteiliges Einpolymerisieren von funktionellen, bevorzugt mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen pro Molekül beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomere.

Die Eigenschaften des betreffenden Poly(meth)acrylats lassen sich insbesondere über eine Variation der Glasübergangstemperatur des Polymers durch unterschiedliche Gewichtsanteile der einzelnen Monomere beeinflussen. Das beziehungsweise die Poly(meth)acrylat(e) der Erfindung können vorzugsweise auf die folgende Monomerzusammensetzung zurückgeführt werden:
a) Acrylsäureester und/oder Methacrylsäureester der folgenden Formel

   CH₂ = C(R^{I})(COOR^{II})

   wobei R^{I} = H oder CH₃ und R^{II} ein Alkylrest mit 4 bis 14 C-Atomen ist,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Die Anteile der entsprechenden Komponenten (a), (b), und (c) werden bevorzugt derart gewählt, dass das Polymerisationsprodukt eine Glasübergangstemperatur von < 0 °C, stärker bevorzugt zwischen -20 und -50 °C (DSC) aufweist. Es ist besonders vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc.).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat und deren verzweigte Isomere, wie zum Beispiel Isobutylacrylat, Isooctylacrylat, Isooctylmethacrylat, 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:
Methylacrylat, Ethylacrylat, Propylacrylat, Methylmethacrylat, Ethylmethacrylat, Benzylacrylat, Benzylmethacrylat, sec-Butylacrylat, *tert*-Butylacrylat, Phenylacrylat, Phenylmethacrylat, Isobornylacrylat, Isobornylmethacrylat, *tert*-Butylphenylacrylat, tert-Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methyl-undecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N*,*N*-Dialkyl-substituierte Amide, wie beispielsweise *N,N-*Dimethylacrylamid, *N,N*-Dimethylmethacrylamid, *N*-Benzylacrylamide, *N*-Isopropylacrylamid, *N*-*tert*-Butylacrylamid, *N*-tert-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, α- und p-Methylstyrol, α-Butylstyrol, 4-n-Butylstyrol, 4-n-Decylstyrol, 3,4-Dimethoxystyrol, Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, bevorzugt von 60 bis 120 °C unter Verwendung der üblichen Mengen an Polymerisationsinitiatoren, die im allgemeinen bei 0,01 bis 5, insbesondere bei 0,1 bis 2 Gew.-%, bezogen auf das Gesamtgewicht der Monomeren, liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-*t*-butylperoxid, Cyclohexylsulfonylacetylperoxid, Diisopropylpercarbonat, *t*-Butylperoktoat, Benzpinacol. In einer sehr bevorzugten Vorgehensweise wird als radikalischer Initiator 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont) verwendet.

Als Lösungsmittel für die Herstellung der Poly(meth)acrylate kommen Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die gewichtsmittleren Molekulargewichte Mw der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes M_{w} und der Polydispersität PD in dieser Schrift beziehen sich auf die Bestimmung per Gelpermeationschromatographie. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Angaben der zahlenmittleren Molmasse Mn und der gewichtsmittleren Molmasse Mw in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm 10³ Å, 8,0 mm * 50 mm (Angaben hier und im Folgenden in der Reihenfolge: Typ, Partikelgrösse, Porosität, Innendurchmesser * Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harze, Elastomere) gegen PS-Standards (Polystyrol-Kalibrierung).

Die Polyacrylate haben vorzugsweise einen K-Wert von 30 bis 90, besonders bevorzugt von 40 bis 70, gemessen in Toluol (1 %ige Lösung, 21 °C). Der K-Wert nach Fikentscher ist ein Maß für das Molekulargewicht und die Viskosität des Polymerisats.

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit.

Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Auch über N-Oxyle lassen sich entsprechende Polyacrylate herstellen. Ferner lässt sich in vorteilhafter Weise die Atom Transfer Radical Polymerization (ATRP) zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden.

Die Monomere zur Herstellung der Poly(meth)acrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die Poly(meth)acrylate der erfindungsgemäßen Haftklebemasse sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses, insbesondere des Extrusionsprozesses, kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten, insbesondere aliphatischen oder mit Aminen deaktivierten trimerisierten Isocyanaten, als Vernetzer.

Geeignete Isocyanate sind insbesondere trimerisierte Derivate von MDI [4,4-Methylen-di(phenylisocyanat)], HDI [Hexamethylendiisocyanat, 1,6-Hexylendüsocyanat] und/oder IPDI [Isophorondüsocyanat, 5-Isocyanato-1-isocyanatomethyl-1,3,3-trimethylcyclohexan], beispielsweise die Typen Desmodur^{®} N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339^{®}, jetzt HF9 ^{®} (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Bevorzugt sind die Poly(meth)acrylate der erfindungsgemäßen Haftklebemasse mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanilin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureestern ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Besonders bevorzugt für die Poly(meth)acrylate als zu vernetzende Polymere ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden erfindungsgemäß besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der zu vernetzenden Polymere keine oder nur geringfügige Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Die erfindungsgemäße Haftklebemasse enthält ferner mindestens einen Synthesekautschuk. Erfindungsgemäß ist der Synthesekautschuk bzw. sind Synthesekautschuke in der Haftklebemasse zu 5 bis 20 Gew.-%, bezogen auf das Gesamtgewicht der Haftklebemasse, enthalten. Bevorzugt enthält die Haftklebemasse 7,5 bis 15 Gew.-%, insbesondere 10 bis 12,5 Gew.-% jeweils bezogen auf das Gesamtgewicht der Haftklebemasse, mindestens eines Synthesekautschuks.

Bevorzugt ist mindestens ein Synthesekautschuk der erfindungsgemäßen Haftklebemasse ein Blockcopolymer mit einem Aufbau A-B, A-B-A, (A-B)ₙ, (A-B)ₙX oder (A-B-A)ₙX, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen.

Insbesondere sind alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, (A-B)₃X oder (A-B)₄X, wobei für A, B und X die vorstehenden Bedeutungen gelten. Ganz besonders bevorzugt sind alle Synthesekautschuke der erfindungsgemäßen Haftklebemasse Blockcopolymere mit einem Aufbau A-B, A-B-A, (A-B)₃X oder (A-B)₄X, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, (A-B)₃X oder (A-B)₄X, das bevorzugt mindestens Diblockcopolymere A-B und/oder Triblockcopolymere A-B-A enthält.

Der Block A ist generell ein glasartiger Block mit einer bevorzugten Glasübergangstemperatur (Tg), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an den gesamten Blockcopolymeren beträgt bevorzugt 10 bis 40 Gew.-%, besonders bevorzugt 15 bis 33 Gew.-%. Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol.

Das Vinylaromatenblockcopolymer weist weiterhin generell einen gummiartigen Block B bzw. Weichblock mit einer bevorzugten Tg von kleiner als Raumtemperatur auf. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die erfindungsgemäße Haftklebemasse enthält darüber hinaus mindestens einen mit dem/den Poly(meth)acrylaten verträglichen Tackifier, der auch als Klebkraftverstärker oder Klebharz bezeichnet werden kann. Unter einem "Tackifier" wird entsprechend dem allgemeinem Fachmannverständnis ein oligomeres oder polymeres Harz verstanden, das die Autohäsion (den Tack, die Eigenklebrigkeit) der Haftklebemasse im Vergleich zu der keinen Tackifier enthaltenden, ansonsten aber identischen Haftklebemasse erhöht.

Unter einem "mit dem/den Poly(meth)acrylaten verträglichen Tackifier" wird ein Tackifier verstanden, der die Glasübergangstemperatur des nach gründlichem Mischen (zum Beispiel in der Schmelze oder in Lösung mit anschließendem Entfernen des Lösemittels) von Poly(meth)acrylat und Tackifier erhaltenen Systems im Vergleich zum reinen Poly(meth)acrylat verändert, wobei auch der Mischung aus Poly(meth)acrylat und Tackifier nur eine Tg zugeordnet werden kann. Ein nicht mit dem/den Poly(meth)acrylat(en) verträglicher Tackifier würde in dem nach gründlichem Mischen von Poly(meth)acrylat und Tackifier erhaltenen System zu zwei Tg führen, von denen eine dem Poly(meth)acrylat und die andere den Harz-Domänen zuzuordnen wäre. Die Bestimmung der Tg erfolgt auch in diesem Zusammenhang kalorimetrisch mittels DSC (differential scanning calorimetry).

Die Poly(meth)acrylat-verträglichen Harze weisen bevorzugt einen DACP-Wert von weniger als 0 °C, sehr bevorzugt von höchstens -20 °C, und/oder bevorzugt einen MMAP-Wert von weniger als 40 °C, sehr bevorzugt von höchstens 20 °C, auf. Zur Bestimmung von MMAP- und DACP-Werten wird auf C. Donker, PSTC Annual Technical Seminar, Proceedings, S. 149-164, Mai 2001 verwiesen.

Erfindungsgemäß ist der mit den Poly(meth)acrylaten verträgliche Tackifier ein Terpenphenolharz oder ein Kolophoniumderivat, besonders bevorzugt ein Terpenphenolharz. Die erfindungsgemäße Haftklebemasse kann auch Mischungen mehrerer Tackifier enthalten. Unter den Kolophoniumderivaten sind Kolophoniumester bevorzugt.

Die erfindungsgemäße Haftklebemasse enthält bevorzugt 7 bis 28 Gew.-%, bezogen auf das Gesamtgewicht der Haftklebemasse, mindestens eines mit den Poly(meth)acrylaten verträglichen Tackifiers. Besonders bevorzugt ist der mit den Poly(meth)acrylaten verträgliche Tackifier bzw. sind mit den Poly(meth)acrylaten verträgliche Tackifier zu 10 bis 25 Gew.-%, bezogen auf das Gesamtgewicht der Haftklebemasse, enthalten.

Bevorzugt ist/sind der bzw. die mit den Poly(meth)acrylaten verträgliche(n) Tackifier der erfindungsgemäßen Haftklebemasse auch mit dem Synthesekautschuk, insbesondere mit dessen Weichblock B, verträglich oder zumindest teilverträglich. Polymer/Harz-Verträglichkeit ist u. a. von der Molmasse der Polymere bzw. Harze abhängig. Die Verträglichkeit ist besser, wenn die Molmasse(n) niedriger liegen. Für ein gegebenes Polymer kann es möglich sein, dass die niedermolekularen Bestandteile der Harzmolmassenverteilung mit dem Polymer verträglich sind, die höhermolekularen aber nicht. Dies ist ein Beispiel für Teilverträglichkeit.

Die erfindungsgemäße Haftklebemasse enthält ferner mindestens ein mit dem/den Synthesekautschuk(en) verträgliches Kohlenwasserstoffharz. Für "mit dem/den Synthesekautschuk(en) verträglich" gilt ein Verständnis analog zu "mit dem/den Poly(meth)acrylaten verträglich". Das mit dem/den Synthesekautschuk(en) verträgliche Kohlenwasserstoffharz ist bevorzugt ausgewählt aus der Gruppe bestehend aus hydrierten Polymerisaten des Dicyclopentadiens; nicht, partiell, selektiv oder vollständig hydrierten Kohlenwasserstoffharzen auf Basis von C5-, C5/C9- oder C9- Monomeren; und Polyterpenharzen auf Basis von α-Pinen und/oder von β-Pinen und/oder von δ-Limonen sowie aus Gemischen der vorstehenden Kohlenwasserstoffharze. Die mit dem/den Synthesekautschuk(en) verträglichen Kohlenwasserstoffharze sind bevorzugt nicht mit den Poly(meth)acrylaten der erfindungsgemäßen Haftklebemasse verträglich. Der aromatische Anteil sollte daher nicht zu hoch liegen.

Die mit den Synthesekautschuken verträglichen Kohlenwasserstoffharze der erfindungsgemäßen Haftklebemasse weisen bevorzugt einen DACP-Wert von mindestens 0 °C, sehr bevorzugt von mindestens 20 °C, und/oder bevorzugt einen MMAP-Wert von mindestens 40 °C, sehr bevorzugt von mindestens 60 °C, auf. Zur Bestimmung von MMAP- und DACP-Werten wird auf C. Donker, PSTC Annual Technical Seminar, Proceedings, S. 149-164, Mai 2001, verwiesen.

Mit dem/den Synthesekautschuk(en) verträgliche Kohlenwasserstoffharze sind in der erfindungsgemäßen Haftklebemasse bevorzugt zu 8 bis 30 Gew.-%, besonders bevorzugt zu 10 bis 25 Gew.-%, bezogen auf das Gesamtgewicht der Haftklebemasse, enthalten.

Der Gesamtgehalt der erfindungsgemäßen Haftklebemasse an mit dem/den Poly(meth)acrylat(en) verträglichen Tackifiern und mit dem/den Synthesekautschuk(en) verträglichen Kohlenwasserstoffharzen beträgt bevorzugt von 25 bis 50 Gew.-%, bezogen auf das Gesamtgewicht der Haftklebemasse.

Das Gewichtsverhältnis von mit den Synthesekautschuken verträglichen Kohlenwasserstoffharzen zu Synthesekautschuken in der erfindungsgemäßen Haftklebemasse beträgt bevorzugt von 1:1 bis 4:1.

Das Gewichtsverhältnis von Poly(meth)acrylaten zu Synthesekautschuken in der erfindungsgemäßen Haftklebemasse beträgt bevorzugt von 2:1 bis 5:1, insbesondere von 3:1 bis 4,5:1.

Das Gewichtsverhältnis von mit den Poly(meth)acrylaten verträglichen Tackifiern zu Synthesekautschuken in der erfindungsgemäßen Haftklebemasse beträgt bevorzugt von 0,5:1 bis 4:1.

Besonders bevorzugt enthält die erfindungsgemäße Haftklebemasse
a) 35 - 55 Gew.-%, bezogen auf das Gesamtgewicht der Haftklebemasse, mindestens eines Poly(meth)acrylats;
b) 7,5 - 15 Gew.-%, bezogen auf das Gesamtgewicht der Haftklebemasse, mindestens eines Synthesekautschuks;
c) 10 - 25 Gew.-% mindestens eines mit dem/den Poly(meth)acrylat(en) verträglichen Tackifiers; und
d) 10 bis 25 Gew.-%, bezogen auf das Gesamtgewicht der Haftklebemasse, mindestens eines mit dem/den Synthesekautschuk(en) verträgliches Kohlenwasserstoffharzes.

Bevorzugt liegt der Synthesekautschuk in der erfindungsgemäßen Haftklebemasse im Poly(meth)acrylat dispergiert vor. Poly(meth)acrylat und Synthesekautschuk sind dementsprechend bevorzugt für sich jeweils homogene Phasen. Die in der Haftklebemasse enthaltenen Poly(meth)acrylate und Synthesekautschuke sind vorzugsweise so gewählt, dass sie bei 23 °C nicht bis zur Homogenität miteinander mischbar sind. Die erfindungsgemäße Haftklebemasse liegt somit zumindest mikroskopisch und zumindest bei Raumtemperatur bevorzugt in mindestens zweiphasiger Morphologie vor. Besonders bevorzugt sind Poly(meth)acrylat(e) und Synthesekautschuk(e) in einem Temperaturbereich von 0 °C bis 50 °C, insbesondere von -30 °C bis 80 °C nicht homogen miteinander mischbar, so dass die Haftklebemasse in diesen Temperaturbereichen zumindest mikroskopisch mindestens zweiphasig vorliegt.

Komponenten sind im Sinne dieser Schrift als dann "nicht homogen miteinander mischbar" definiert, wenn sich auch nach innigem Vermischen die Ausbildung zumindest zweier stabiler Phasen physikalisch und/oder chemisch zumindest mikroskopisch nachweisen lässt, wobei die eine Phase reich an der einen Komponente und die zweite Phase reich an der anderen Komponente ist. Ein Vorliegen vernachlässigbar geringer Mengen der einen Komponente in der anderen, das einer Ausbildung der Mehrphasigkeit nicht entgegensteht, wird dabei als unbeachtlich angesehen. So können in der Poly(meth)acrylatphase geringe Mengen an Synthesekautschuk und/oder in der Synthesekautschukphase geringe Mengen an Poly(meth)acrylat-Komponente vorliegen, sofern es sich nicht um wesentliche Mengen handelt, welche die Phasenseparation beeinflussen.

Die Phasentrennung kann insbesondere derart realisiert sein, dass diskrete Bereiche ("Domänen"), die reich (wenn man lediglich das Verhältnis aus Synthesekautschuk und Poly(meth)acrylat betrachtet) an Synthesekautschuk sind - also im Wesentlichen aus Synthesekautschuk gebildet sind -, in einer kontinuierlichen Matrix, die reich an Poly(meth)acrylat ist - also im Wesentlichen aus Poly(meth)acrylat gebildet ist -, vorliegen. Ein geeignetes Analysesystem für eine Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen bei der dynamischen Differenzkalorimetrie (DDK, DSC) aufweisen. Phasentrennung liegt erfindungsgemäß dann vor, wenn sie sich durch mindestens eine der Analysenmethoden eindeutig zeigen lässt.

Innerhalb der Synthesekautschuk-reichen Domänen kann als Feinstruktur zudem zusätzliche Mehrphasigkeit vorliegen, wobei die A-Blöcke eine Phase und die B-Blöcke eine zweite Phase bilden.

Die erfindungsgemäße Haftklebemasse ist geschäumt. Die Schäumung kann mittels beliebiger, im Stand der Technik bekannter chemischer und/oder physikalischer Methoden erfolgen. Bevorzugt wird eine geschäumte erfindungsgemäße Haftklebemasse jedoch durch das Einbringen und nachfolgende Expandieren von Mikroballons erhalten. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Wird mittels Mikroballons geschäumt, dann können die Mikroballons als Batch, Paste oder als unverschnittenes oder verschnittenes Pulver der Formulierung zugeführt werden. Dosierpunkte sind beispielsweise vor oder nach dem Zugabepunkt des Poly(meth)acrylats denkbar, etwa gemeinsam als Pulver mit dem Synthesekautschuk oder als Paste zu einem späteren Zeitpunkt.

Es ist eine Vielzahl an Mikroballontypen kommerziell erhältlich, welche sich im Wesentlichen über ihre Größe (6 bis 45 µm) Durchmesser im unexpandierten Zustand) und ihre zur Expansion benötigten Starttemperaturen (75 bis 220 °C) differenzieren. Ein Beispiel für kommerziell erhältliche Mikroballons sind die Expancel^{®} DU-Typen (DU = dry unexpanded) von der Firma Akzo Nobel. Unexpandierte Mikroballontypen sind auch als wässrige Dispersion mit einem Feststoff- beziehungsweise Mikroballonanteil von ca.40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite^{®} oder mit der Typenbezeichnung DE (Dry Expanded) kommerziell erhältlich.

Die Dichte einer geschäumten erfindungsgemäßen Haftklebemasse beträgt bevorzugt 200 bis 1000 kg/m³, stärker bevorzugt 300 bis 900 kg/m³, insbesondere 400 bis 800 kg/m³.

Je nach Anwendungsgebiet und gewünschten Eigenschaften der erfindungsgemäßen Haftklebemasse können dieser weitere Komponenten und/oder Additive zugesetzt sein, und zwar jeweils allein oder in Kombination mit einem oder mehreren anderen Additiven oder Komponenten.

So kann die erfindungsgemäße Haftklebemasse beispielsweise Pulver- und granulatförmige, insbesondere auch abrasive und verstärkende, Füllstoffe, Farbstoffe und Pigmente wie z. B. Kreiden (CaCO₃), Titandioxid, Zinkoxide und/oder Ruße, enthalten. Bevorzugt enthält die Haftklebemasse eine oder mehrere Kreideform(en) als Füllstoff, besonders bevorzugt Mikrosöhl-Kreide (Fa. Söhlde). Bei bevorzugten Anteilen bis zu 20 Gew.-% verändern sich die klebtechnischen Eigenschaften (Scherfestigkeit bei Raumtemperatur, Sofortklebkraft auf Stahl und PE) durch den Füllstoffzusatz praktisch nicht. Darüber hinaus können verschiedene organische Füllstoffe enthalten sein.

Geeignete Additive für die erfindungsgemäße Haftklebemasse sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons").

Weiterhin kann die erfindungsgemäße Haftklebemasse schwerentflammbare Füllstoffe, beispielsweise Ammoniumpolyphosphat; elektrisch leitfähige Füllstoffe, beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive, beispielsweise Eisen-(III)-Oxide; organische, nachwachsende Rohstoffe wie beispielsweise Holzmehl, organische und/oder anorganische Nanopartikel, Fasern; Compoundierungsmittel, Alterungsschutzmittel, Lichtschutzmittel und/oder Ozonschutzmittel enthalten.

Optional können Weichmacher enthalten sein. Als Weichmacher können z.B. (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

Ein Verfahren zur Herstellung einer erfindungsgemäßen Haftklebemasse kann zunächst eine Aufkonzentration der aus der Polymerherstellung resultierenden Polyacrylat-Lösung oder -Dispersion umfassen. Die Aufkonzentration des Polymerisats kann in Abwesenheit von Vernetzer- und Beschleunigersubstanzen geschehen. Es ist aber auch möglich, maximal eine dieser Substanzen dem Polymerisat bereits vor der Aufkonzentration zuzusetzen, so dass die Aufkonzentration dann in Gegenwart dieser Substanz(en) erfolgt.

Synthesekautschuk und Kohlenwasserstoffharz können zusammen oder nacheinander über einen Feststoffdosierer als Granulat in einen Compounder gegeben werden, wo sie in einer ersten Mischzone homogen miteinander vermischt werden. Über Sidefeeder können dann das aufkonzentrierte und ggf. schon aufgeschmolzene Poly(meth)acrylat und schließlich der Poly(meth)acrylat-verträgliche Tackifier in den Compounder eingebracht werden. In besonderen Ausführungen des Verfahrens ist es auch möglich, dass Aufkonzentration des Poly(meth)acrylats und Compoundierung im selben Reaktor stattfinden. Die Poly(meth)acrylat-verträglichen Harze können auch über eine Harzschmelze und einen weiteren Sidefeeder an anderer Verfahrensposition, z. B. nach Eingabe von Synthesekautschuk und Poly(meth)acrylat, zugeführt werden. Der Synthesekautschuk-verträgliche Tackifier kann ebenfalls fest oder als Schmelze dosiert werden. Es bietet sich der Dosierpunkt des Synthesekautschuks hierfür an oder auch ein Dosierpunkt im späteren Verfahrensverlauf.

Weitere Additive und/oder Weichmacher können ebenfalls als Feststoffe oder Schmelze oder auch als Batch in Kombination mit einer anderen Formulierungskomponente zugeführt werden.

Insbesondere kann als Compounder ein Extruder eingesetzt werden. Die Polymere liegen im Compounder bevorzugt in der Schmelze vor, entweder weil sie bereits im Schmelzezustand eingegeben werden oder indem sie im Compounder bis zur Schmelze erhitzt bzw. verarbeitet werden. Vorteilhafterweise werden die Polymerisate im Compounder durch Beheizung in der Schmelze gehalten.

Sofern Beschleunigersubstanzen für die Vernetzung des Poly(meth)acrylats eingesetzt werden, werden diese den Polymerisaten bevorzugt erst kurz vor der Weiterverarbeitung, insbesondere einer Beschichtung oder anderweitigen Ausformung, zugesetzt. Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden.

Die Vernetzer, beispielsweise Epoxide, und die Beschleuniger können auch beide kurz vor der Weiterverarbeitung der Zusammensetzung zugesetzt werden, also vorteilhaft in der Phase, wie sie vorstehend für die Beschleuniger dargestellt ist. Hierzu ist es vorteilhaft, wenn Vernetzer und Beschleuniger an ein- und derselben Stelle gleichzeitig in den Prozess eingebracht werden, gegebenenfalls als Epoxid-Beschleuniger-Abmischung. Grundsätzlich ist es auch möglich, die Zugabezeitpunkte bzw. Zugabestellen für Vernetzer und Beschleuniger in den oben dargestellten Ausführungen zu vertauschen, so dass der Beschleuniger vor den Vernetzersubstanzen zugesetzt werden kann.

Nach der Compoundierung der Masse kann ihre Weiterverarbeitung, insbesondere die Beschichtung auf einen permanenten oder auf einen temporären Träger, erfolgen. Ein permanenter Träger bleibt bei der Anwendung mit der Klebemassenschicht verbunden, während der temporäre Träger in dem weiteren Verarbeitungsprozess, zum Beispiel der Konfektionierung des Klebebandes, oder bei der Anwendung von der Klebemassenschicht entfernt wird.

Die Beschichtung der Selbstklebemassen kann mit dem Fachmann bekannten Hotmelt-Beschichtungsdüsen oder bevorzugt mit Walzenauftragswerken, auch Beschichtungskalander genannt, erfolgen. Die Beschichtungskalander können vorteilhaft aus zwei, drei, vier oder mehr Walzen bestehen.

Bevorzugt ist zumindest eine der Walzen mit einer anti-adhäsiven Walzenoberfläche versehen. Bevorzugt sind alle Walzen des Kalanders, die mit der Haftklebemasse in Berührung kommen, anti-adhäsiv ausgerüstet. Als anti-adhäsive Walzenoberfläche wird bevorzugt ein Stahl-Keramik-Silikon-Verbundwerkstoff eingesetzt. Derartige Walzenoberflächen sind gegen thermische und mechanische Belastungen resistent.

Es hat sich als besonders vorteilhaft herausgestellt, wenn Walzenoberflächen eingesetzt werden, die eine Oberflächenstruktur aufweisen, insbesondere in der Art, dass die Fläche keinen vollständigen Kontakt zur zu verarbeitenden Masseschicht herstellt, sondern dass die Kontaktfläche - verglichen mit einer glatten Walze - geringer ist. Besonders günstig sind strukturierte Walzen wie Metall-Rasterwalzen, beispielsweise Stahlrasterwalzen.

Ein weiterer Gegenstand der Erfindung ist ein Klebeband, das mindestens eine Schicht einer erfindungsgemäßen Haftklebemasse enthält. Die erfindungsgemäßen Haftklebemassen eignen sich besonders für die Ausbildung hoher Schichtdicken. Die Dicke der vorstehenden Schicht einer erfindungsgemäßen Haftklebemasse beträgt daher üblicherweise 100 µm bis 5000 µm, bevorzugt 100 µm bis 2000 µm, besonders bevorzugt 150 µm bis 1800 µm, insbesondere 200 µm bis 1500 µm, beispielsweise 500 µm bis 1300 µm.

Bevorzugt besteht das erfindungsgemäße Klebeband aus einer Schicht einer erfindungsgemäßen Haftklebemasse. In diesem Fall handelt es sich also um ein sogenanntes Transferklebeband. Die Haftklebemasse kann aber auch als Trägerschicht eines ein- oder doppelseitigen Klebebands vorliegen oder mindestens eine der haftklebrigen äußeren Schichten eines trägerhaltigen ein- oder doppelseitigen Klebebands bilden. Ein Releaseliner, wie er üblicherweise zum (temporären) Schutz von Haftklebemassen auf diesen aufgebracht wird, wird vorliegend nicht als Bestandteil eines Klebebands angesehen. Dementsprechend kann das erfindungsgemäße Klebeband lediglich aus einer Schicht einer erfindungsgemäßen Haftklebemasse bestehen, auch wenn diese mit einem Releaseliner abgedeckt ist.

### Beispiele

### Prüfmethoden

### Test 1: Klebkraft 90°

Die Bestimmung der Klebkraft auf Stahl bzw. auf Testlack (Produkt Nr. FF99-0778 der Firma BASF) erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Prüfplatte wurde vor der Messung gereinigt und konditioniert. Dazu wurde die Stahlplatte zunächst mit Aceton (Stahl) bzw. iso-Propanol (Lack) abgewischt und danach 5 Minuten (Stahl) bzw. 2 h (Lack) an der Luft liegen gelassen, damit das Lösungsmittel abdampfen konnte. Die dem Prüfuntergrund abgewandte Seite des einschichtigen Klebebands wurde dann mit 36 µm geätzter PET-Folie abgedeckt, wodurch verhindert wurde, dass sich das Muster bei der Messung dehnt. Danach erfolgte das Anrollen des Prüfmusters auf den Stahluntergrund bzw. den Lack. Hierzu wurde das Tape mit einer 4 kg - Rolle fünfmal hin und her mit einer Aufrollgeschwindigkeit von 10 m/min überrollt. 20 min nach dem Anrollen wurde die Stahl- bzw. Lackplatte in eine spezielle Halterung geschoben, die es ermöglicht, das Muster in einem Winkel von 90 ° senkrecht nach oben abzuziehen. Die Klebkraftmessung erfolgte mit einer Zwick-Zugprüfmaschine. Die Messergebnisse sind in N/cm angegeben und sind gemittelt aus drei Einzelmessungen.

Eine Klebkraft von mindestens 30 N/cm wird als gut, eine Klebkraft von mindestens 50 N/cm als sehr gut eingestuft. Besonders positiv bemerkenswert sind Klebemassen, die auf unpolaren Klebuntergründen wie Testlack eine ähnliche Klebleistung zeigen wie auf Stahl.

### Test 2: dynamischer Schertest

Ein quadratisches Transferklebeband mit einer Kantenlänge von 25 mm wurde zwischen zwei gereinigte Stahlplatten verklebt. Die Verklebung wurde eine Minute lang mit 0,9 kN angedrückt. Nach einer Lagerung von 24 h wurde der Verbund in einer Zugprüfmaschine der Firma ZWICK mit 50 mm/min bei 23 °C und 50 % relativer Feuchte so getrennt, dass die beiden Stahlplatten unter einem Winkel von 180 ° auseinander gezogen wurden. Die Maximalkraft wurde in N/cm² ermittelt, das Ergebnis ist der Mittelwert aus 3 Einzelmessungen.

Eine dynamische Scherfestigkeit von mindestens 100 N/cm² wird als gut, von mindestens 120 N/cm² als sehr gut eingestuft.

### Test 3: dynamischer T-Block-Test

Zwei Aluminiumprofile in T-Form (25 mm x 25 mm x 25 mm ) wurden mit Aceton gereinigt, woraufhin das Lösemittel 10 min abdampfen konnte. Das Klebebandmuster wurde zu quadratischen Abschnitten mit einer Kantenlänge von 25 mm zugeschnitten. Anschließend wurden die Aluminiumprofile mit einem doppelseitigen Klebebandmuster verklebt und für 15 s mit 110 N verpresst. Der Prüfling wurde anschließend 24 h bei 23 °C und 50 % relativer Luftfeuchtigkeit äquilibriert. Anschließend wurde der Prüfling in eine Zugprüfmaschine der Firma ZWICK eingespannt, woraufhin bei 300 mm/min die beiden T-Blöcke auseinandergezogen wurden. Als Ergebnis wird der Mittelwert aus fünf Einzelmessungen in N/cm² angegeben.

Eine T-Block-Klebfestigkeit von mindestens 80 N/cm² wird als gut, von mindestens 120 N/cm² als sehr gut eingestuft.

### Herstellung Polyacrylat-Basispolymer:

Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben.

Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben, und nach 4 h wurde mit 10 kg Aceton/Isopropanol-Gemisch (94:6) verdünnt.

Nach 5 h sowie nach 7 h wurde jeweils mit 150 g Bis-(4-tert-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde getrocknet. Das resultierende Polyacrylat hatte einen K-Wert von 58,9, ein mittleres Molekulargewicht von Mw = 748.000 g/mol, eine Polydispersität von D (Mw/Mn) = 8,9 und eine statische Glasübergangstemperatur von Tg = - 35,2 °C.

### Beispiel 1:

In einen Planetwalzenextruder mit vier Mischzonen wurden über zwei Feststoffdosiererder Synthesekautschuk Kraton D1102 und das Kohlenwasserstoffharz Piccolyte A115 als Granulat in den Einzugsbereich eingegeben und in der ersten Mischzone zu einer homogenen Masse gemischt. In der folgenden Zone wurde das Polyacrylat-Basispolymer zugeführt, das in einem Einschneckenextruder vorgewärmt wurde. Anschließend wurde mittels einer Harzschmelze das Terpenphenolharz Dertophen T105 zudosiert. Die Mischung wurde in einen Doppelschneckenextruder überführt und dort mit einer Vernetzer-(Polypox R16 20 % in Rheofos RDP) und Beschleuniger- (20 % Epicure 925 in Rheofos RDP) Lösung versetzt. Es folgte die Zugabe einer Mikroballonpaste (50 % Expancel 051DU40 in Ethomeen C25). Die Schmelze wurde über einen Zweiwalzenkalander zwischen zwei Trennfolien (silikonisierte PET-Folie) beschichtet. Es resultierte ein einschichtiges Klebeband mit einer Schichtdicke von 1000 µm und einer Dichte von 700 kg/m³. Die Zusammensetzung lag bei 42 % Polyacrylat, 10% Kraton D1102,25 % Dertophen T105, 15 % Piccolyte A115,2 % Vernetzer-/Beschleuniger-Lösung (Vernetzer:Beschleuniger = 1:1), 6 % Mikroballonpaste (Angaben in Gew.-%).

Untersuchung der Muster nach Test 1 ergab eine Sofortklebkraft auf Stahl von 56 N/cm und auf Lack FF99 von 41 N/cm. Untersuchung der Muster nach Test 2 ergab 123 N/cm². Evaluierung der Muster nach Test 3 ergab 145 N/cm².

### Beispiel 2:

Es wurde analog Beispiel 1 vorgegangen. Es resultierte ein einschichtiges Klebeband mit einer Schichtdicke von 1000 µm und einer Dichte von 630 kg/m³. Die Zusammensetzung lag bei 44 % Polyacrylat, 12 % Kraton D1102, 14 % Dertophen T105, 22 % Piccolyte A115, 2 % Vernetzer-/Beschleuniger-Lösung (Vernetzer:Beschleuniger = 1:1), 6 % Mikroballonpaste (Angaben in Gew.-%).

Untersuchung der Muster nach Test 1 ergab eine Sofortklebkraft auf Stahl von 61 N/cm und auf Lack FF99 von 52 N/cm. Untersuchung der Muster nach Test 2 ergab 144 N/cm². Evaluierung der Muster nach Test 3 ergab 133 N/cm².

### Beispiel 3:

Es wurde analog Beispiel 1 vorgegangen. Es resultierte ein einschichtiges Klebeband mit einer Schichtdicke von 1000 µm und einer Dichte von 500 kg/m³. Die Zusammensetzung lag bei 50 % Polyacrylat, 8 % Kraton D1118, 16 % Dertophen T105, 18 % Piccolyte A115, 2 % Vernetzer-/Beschleuniger-Lösung (Vernetzer:Beschleuniger = 1:1), 6 % Mikroballonpaste (Angaben in Gew.-%).

Untersuchung der Muster nach Test 1 ergab eine Sofortklebkraft auf Stahl von 54 N/cm und auf Lack FF99 von 32 N/cm. Untersuchung der Muster nach Test 2 ergab 124 N/cm². Evaluierung der Muster nach Test 3 ergab 144 N/cm².

### Vergleichsbeispiel 4:

Es wurde analog Beispiel 1 vorgegangen, jedoch wurde im Planetwalzenextruder weder Synthesekautschuk noch Kohlenwasserstoffharz zugegeben. Es resultierte ein einschichtiges Klebeband mit einer Schichtdicke von 1000 µm und einer Dichte von 700 kg/m³. Die Zusammensetzung lag bei 63 % Polyacrylat, 29 % Dertophen T105, 2 % Vernetzer-/Beschleuniger-Lösung (Vernetzer:Beschleuniger = 1:1), 6 % Mikroballonpaste (Angaben in Gew.-%).

Untersuchung der Muster nach Test 1 ergab eine Sofortklebkraft auf Stahl von 63 N/cm und auf Lack FF99 von 29 N/cm. Untersuchung der Muster nach Test 2 ergab 138 N/cm². Evaluierung der Muster nach Test 3 ergab 140 N/cm2.

### Vergleichsbeispiel 5:

Es wurde analog Beispiel 1 vorgegangen, jedoch wurde kein Kohlenwasserstoffharz eingesetzt. Es resultierte ein einschichtiges Klebeband mit einer Schichtdicke von 1000 µm und einer Dichte von 620 kg/m³. Die Zusammensetzung lag bei 47 % Polyacrylat, 15 % Kraton D1102, 30 % Dertophen T105, 2 % Vernetzer-/Beschleuniger-Lösung (Vernetzer:Beschleuniger = 1:1), 6 % Mikroballonpaste (Angaben in Gew.-%).

Untersuchung der Muster nach Test 1 ergab eine Sofortklebkraft auf Stahl von 22 N/cm und auf Lack FF99 von 24 N/cm. Untersuchung der Muster nach Test 2 ergab 92 N/cm². Evaluierung der Muster nach Test 3 ergab 89 N/cm².

### Vergleichsbeispiel 6:

Es wurde analog Beispiel 1 vorgegangen, jedoch wurde kein Poly(meth)acrylatverträglicher Tackifier eingesetzt. Es resultierte ein einschichtiges Klebeband mit einer Schichtdicke von 1000 µm und einer Dichte von 600 kg/m³. Die Zusammensetzung lag bei 55 % Polyacrylat, 9 % Kraton D1102, 28 % Piccolyte A115, 2 % Vernetzer-/Beschleuniger-Lösung (Vernetzer:Beschleuniger = 1:1), 6 % Mikroballonpaste (Angaben in Gew.-%).

Untersuchung der Muster nach Test 1 ergab eine Sofortklebkraft auf Stahl von 19 N/cm und auf Lack FF99 von 3,8 N/cm. Untersuchung der Muster nach Test 2 ergab 97 N/cm². Evaluierung der Muster nach Test 3 ergab 97 N/cm².

**Tabelle 1: Testergebnisse**

| Beispiel Nr. | Klebkraft 90° Stahl (N/cm) | Klebkraft 90° Lack (N/cm) | Dynamischer Schertest (N/cm²) | Dynamischer T-Block-Test (N/cm²) |
|---|---|---|---|---|
| 1 | 56 | 41 | 123 | 145 |
| 2 | 61 | 52 | 144 | 133 |
| 3 | 54 | 32 | 124 | 144 |
| 4 (Vgl.) | 63 | 29 | 138 | 140 |
| 5 (Vgl.) | 22 | 24 | 92 | 89 |
| 6 (Vgl.) | 19 | 3,8 | 97 | 97 |

## Patentansprüche

1. Haftklebemasse, enthaltend:
a) 30 - 65 Gew.-%, bezogen auf das Gesamtgewicht der Haftklebemasse, mindestens eines Poly(meth)acrylats;
b) 5 - 20 Gew.-%, bezogen auf das Gesamtgewicht der Haftklebemasse, mindestens eines Synthesekautschuks;
c) mindestens einen mit dem/den Poly(meth)acrylat(en) verträglichen Tackifier; und
d) mindestens ein von (c) unterschiedliches und mit dem/den Synthesekautschuk(en) verträgliches Kohlenwasserstoffharz;
**dadurch gekennzeichnet, dass** der mit dem/den Poly(meth)acrylat(en) verträgliche Tackifier ein Terpenphenolharz oder ein Kolophoniumderivat ist und
dass die Haftklebemasse geschäumt ist.

2. Haftklebemasse gemäß Anspruch 1, **dadurch gekennzeichnet, dass** das Gewichtsverhältnis von mit den Synthesekautschuken verträglichen Kohlenwasserstoffharzen zu Synthesekautschuken von 1:1 bis 4:1 beträgt.

3. Haftklebemasse gemäß mindestens einem der vorstehenden Ansprüche, **dadurch gekennzeichnet, dass** das Gewichtsverhältnis von mit den Poly(meth)acrylaten verträglichen Tackifiern zu Synthesekautschuken von 0,5:1 bis 4:1 beträgt.

4. Haftklebemasse gemäß mindestens einem der vorstehenden Ansprüche, **dadurch gekennzeichnet, dass** der Gesamtgehalt an mit dem/den Poly(meth)acrylat(en) verträglichen Tackifiern und mit dem/den Synthesekautschuk(en) verträglichen Kohlenwasserstoffharzen von 25 bis 50 Gew.-%, bezogen auf das Gesamtgewicht der Haftklebemasse, beträgt.

5. Haftklebemasse gemäß mindestens einem der vorstehenden Ansprüche, **dadurch gekennzeichnet, dass** der Synthesekautschuk ein Blockcopolymer mit einem Aufbau A-B, A-B-A, (A-B)ₙ, (A-B)ₙX oder (A-B-A)ₙX ist,
worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen.

6. Haftklebemasse gemäß Anspruch 5, **dadurch gekennzeichnet, dass** der Gewichtsanteil . der Blöcke A, bezogen auf sämtliche in der Haftklebemasse enthaltenen Blockcopolymere, 10 bis 40 Gew.-% beträgt.

7. Haftklebemasse gemäß mindestens einem der vorstehenden Ansprüche, **dadurch gekennzeichnet, dass** das mit dem/den Synthesekautschuk(en) verträgliche Kohlenwasserstoffharz ausgewählt ist aus der Gruppe bestehend aus hydrierten Polymerisaten des Dicyclopentadiens; nicht, partiell, selektiv oder vollständig hydrierten Kohlenwasserstoffharzen auf Basis von C5-, C5/C9- oder C9- Monomeren; und Polyterpenharzen auf Basis von α-Pinen und/oder von β-Pinen und/oder von δ-Limonen sowie aus Gemischen der vorstehenden Kohlenwasserstoffharze.

8. Klebeband, enthaltend mindestens eine Schicht einer Haftklebemasse gemäß mindestens einem der vorstehenden Ansprüche.

9. Klebeband gemäß Anspruch 8, **dadurch gekennzeichnet, dass** die Dicke der Schicht 100 µm bis 5000 µm beträgt.

10. Klebeband gemäß mindestens einem der Ansprüche 8 und 9, **dadurch gekennzeichnet, dass** das Klebeband aus einer Schicht einer Haftklebemasse gemäß mindestens einem der Ansprüche 1 bis 7 besteht.

## Claims

1. Pressure-sensitive adhesive comprising:
a) 30 - 65 wt%, based on the total weight of the pressure-sensitive adhesive, of at least one poly(meth)acrylate;
b) 5 - 20 wt%, based on the total weight of the pressure-sensitive adhesive, of at least one synthetic rubber;
c) at least one tackifier compatible with the poly(meth)acrylate(s); and
d) at least one hydrocarbon resin which is different from (c) and is compatible with the synthetic rubber(s);
**characterized in that** the tackifier compatible with the poly(meth)acrylate(s) is a terpene-phenolic resin or a rosin derivative and
**in that** the pressure-sensitive adhesive is foamed.

2. Pressure-sensitive adhesive according to Claim 1, **characterized in that** the weight ratio of hydrocarbon resins compatible with the synthetic rubbers to synthetic rubbers is from 1:1 to 4:1.

3. Pressure-sensitive adhesive according to at least one of the preceding claims, **characterized in that** the weight ratio of tackifiers compatible with the poly(meth)acrylates to synthetic rubbers is from 0.5:1 to 4:1.

4. Pressure-sensitive adhesive according to at least one of the preceding claims, **characterized in that** the total amount of tackifiers compatible with the poly(meth)acrylate(s) and hydrocarbon resins compatible with the synthetic rubber(s) is from 25 to 50 wt%, based on the total weight of the pressure-sensitive adhesive.

5. Pressure-sensitive adhesive according to at least one of the preceding claims, **characterized in that** the synthetic rubber is a block copolymer having an A-B, A-B-A, (A-B)ₙ, (A-B)ₙX or (A-B-A)ₙX construction,
in which
- the blocks A independently of one another are a polymer formed by polymerization of at least one vinylaromatic;
- the blocks B independently of one another are a polymer formed by polymerization of conjugated dienes having 4 to 18 C atoms and/or isobutylene, or are a partially or fully hydrogenated derivative of such a polymer;
- X is the residue of a coupling reagent or initiator and
- n is an integer ≥ 2.

6. Pressure-sensitive adhesive according to Claim 5, **characterized in that** the weight fraction of the blocks A, based on all block copolymers present in the pressure-sensitive adhesive, is 10 to 40 wt%.

7. Pressure-sensitive adhesive according to at least one of the preceding claims, **characterized in that** the hydrocarbon resin compatible with the synthetic rubber(s) is selected from the group consisting of hydrogenated polymers of dicyclopentadiene; unhydrogenated or partially, selectively or fully hydrogenated hydrocarbon resins based on C5, C5/C9 or C9 monomers; and polyterpene resins based on α-pinene and/or on β-pinene and/or on δ-limonene and also mixtures of the above hydrocarbon resins.

8. Adhesive tape comprising at least one layer of a pressure-sensitive adhesive according to at least one of the preceding claims.

9. Adhesive tape according to Claim 8, **characterized in that** the thickness of the layer is 100 µm to 5000 µm.

10. Adhesive tape according to at least one of Claims 8 and 9, **characterized in that** the adhesive tape consists of a layer of a pressure-sensitive adhesive according to at least one of Claims 1 to 7.

## Revendications

1. Masse autoadhésive, contenant :
a) 30 à 65 % en poids, par rapport au poids total de la masse autoadhésive, d'au moins un poly(méth)acrylate ;
b) 5 à 20 % en poids, par rapport au poids total de la masse autoadhésive, d'au moins un caoutchouc de synthèse ;
c) au moins un agent tackifiant compatible avec le ou les poly(méth)acrylates ; et
d) au moins une résine d'hydrocarbure différente de (c) et compatible avec le ou les caoutchoucs de synthèse ;
**caractérisée en ce que** l'agent tackifiant compatible avec le ou les poly(méth)acrylates est une résine de terpènephénol ou un dérivé de colophane et
que la masse autoadhésive est moussée.

2. Masse autoadhésive selon la revendication 1, **caractérisée en ce que** le rapport en poids des résines d'hydrocarbure compatibles avec les caoutchoucs de synthèse sur les caoutchoucs de synthèse est de 1 : 1 à 4 : 1.

3. Masse autoadhésive selon au moins l'une quelconque des revendications précédentes, **caractérisée en ce que** le rapport en poids des agents tackifiants compatibles avec les poly(méth)acrylates sur les caoutchoucs de synthèse est de 0,5 : 1 à 4 : 1.

4. Masse autoadhésive selon au moins l'une quelconque des revendications précédentes, **caractérisée en ce que** la teneur totale en agents tackifiants compatibles avec le ou les poly(méth)acrylates et en résines d'hydrocarbure compatibles avec le ou les caoutchoucs de synthèse est de 25 à 50 % en poids, par rapport au poids total de la masse autoadhésive.

5. Masse autoadhésive selon au moins l'une quelconque des revendications précédentes, **caractérisée en ce que** le caoutchouc de synthèse est un copolymère à blocs doté d'une construction A-B, A-B-A, (A-B)ₙ, (A-B)ₙX ou (A-B-A)ₙX, dans lesquelles
- les blocs A représentent indépendamment les uns des autres un polymère formé par polymérisation d'au moins un composé vinylaromatique ;
- les blocs B représentent indépendamment les uns des autres un polymère formé par polymérisation de diènes conjugués comportant 4 à 18 atomes de C et/ou d'isobutylène, ou représentent un dérivé partiellement ou totalement hydrogéné d'un tel polymère ;
- X représente le radical d'un réactif de couplage ou d'un initiateur et
- n représente un nombre entier ≥ 2.

6. Masse autoadhésive selon la revendication 5, **caractérisée en ce que** la proportion en poids des blocs A, par rapport à tous les copolymères à blocs contenus dans la masse autoadhésive, est de 10 à 40 % en poids.

7. Masse autoadhésive selon au moins l'une quelconque des revendications précédentes, **caractérisée** la résine d'hydrocarbure compatible avec le ou les caoutchoucs de synthèse est choisie dans le groupe constitué par des polymères hydrogénés du dicyclopentadiène ; des résines d'hydrocarbure non, partiellement, sélectivement ou totalement hydrogénées à base de monomères en C5, en C5/C9 ou en C9 ; et des résines de polyterpène à base de α-pinène et/ou de β-pinène et/ou de δ-limonène ainsi que des mélanges des résines d'hydrocarbure précédentes.

8. Ruban adhésif, contenant au moins une couche d'une masse autoadhésive selon au moins l'une quelconque des revendications précédentes.

9. Ruban adhésif selon la revendication 8, **caractérisé en ce que** l'épaisseur de la couche est de 100 µm à 5 000 µm.

10. Ruban adhésif selon au moins l'une quelconque des revendications 8 et 9, **caractérisé en ce que** le ruban adhésif est constitué d'une couche d'une masse autoadhésive selon au moins l'une quelconque des revendications 1 à 7.
